# EUROPEAN PATENT SPECIFICATION

(11) **EP 2 884 496 B1**
(45) Date of publication and mention of the grant of the patent: **06.09.2017**
(21) Application number: 13879550.5
(22) Date of filing: 12.08.2013
(51) Int. Cl.: G21C 17/00, G21C 17/10, G21D 3/00, G21D 3/04

(54) **NUCLEAR REACTOR MONITORING DEVICE, NUCLEAR REACTOR CONTROL DEVICE, AND NUCLEAR POWER GENERATION PLANT**
KERNREAKTORÜBERWACHUNGSVORRICHTUNG, KERNREAKTORSTEUERUNGSVORRICHTUNG UND KERNKRAFTANLAGE
DISPOSITIF DE SURVEILLANCE DE RÉACTEUR NUCLÉAIRE, DISPOSITIF DE COMMANDE DE RÉACTEUR NUCLÉAIRE ET INSTALLATION DE GÉNÉRATION D'ÉNERGIE NUCLÉAIRE

(30) Priority: 13.08.2012 JP 2012179599
(43) Date of publication of application: 17.06.2015
(73) Proprietor: Mitsubishi Heavy Industries, Ltd., Tokyo 108-8215 (JP)
(72) Inventor: UEDA, Kenichiro, Tokyo 108-8215 (JP); NAGAI, Masatoshi, Tokyo 108-8215 (JP); MORI, Kenta, Tokyo 108-8215 (JP)
(74) Representative: Intès, Didier Gérard André
(86) International application number: PCT/JP2013/071832
(87) International publication number: WO 2014/027646

(56) References cited:
- EP-A2- 0 396 321
- DE-A1- 19 845 988
- JP-A- 2000 019 287
- JP-A- 2006 039 786
- JP-A- 2011 209 127
- JP-A- 2011 247 827
- JP-A- 2012 013 581
- JP-B2- 4 895 794
- JP-B2- 4 919 791

## Description

### Technical Field

The present invention relates to a nuclear reactor monitoring device, a nuclear reactor control device, and a nuclear power generation plant that monitor a nuclear reactor from a current reactor core state based on an operation plan and a future reactor core state to be predicted.

### Background Art

In nuclear power generation plants, an operation plan of a nuclear reactor is set in order to ensure predetermined generator output (power generation amount), and the nuclear reactor is controlled on the basis of this operation plan. That is, an operator controls the nuclear reactor on the basis of the operation plan in a central control room. In this case, the operator acquires a plurality of data (state quantities of the nuclear reactor) of various detectors arranged at the nuclear reactor, displays this data and actual measurement values of reactor core properties based on the data, and monitors the data or the actual measurement values so as not to deviate from preset limiting values.

In addition to the current data or the current actual measurement values of the nuclear reactor, prediction values of the reactor core properties in the nuclear reactor that may change in the future are calculated, the prediction values are displayed, and the actual measurement values are monitored so as not to deviate from the prediction values. As a related-art nuclear reactor monitoring device, there is one example described in the following PTL 1.

In the reactor core monitoring device described in PTL 1, reactor core properties performance data is generated and stored from the state quantities of the nuclear reactor core, a change with the passage of time of the reactor core properties is predicted and calculated by a calculation model based on operation plan data to generate and store reactor core properties prediction data when the reactor core properties performance data is stored, and the reactor core properties prediction data is displayed together with the reactor core properties performance data.

### Citation List

### Patent Literature

[PTL 1] Japanese Patent No. 4919791
[PTL 2] EP 0 396 321 A2
[PTL 3] DE 198 45 988 A2

### Summary of Invention

### Technical Problem

In the above-described related-art reactor core monitoring device, when the reactor core properties performance data is generated from the state quantities of the nuclear reactor core and stored, the reactor core properties prediction data is generated on the basis of the operation plan data and stored, and the reactor core properties performance data and the reactor core properties prediction data are displayed. In this case, a reactor core properties performance calculation unit calculates the reactor core properties performance data periodically, that is, at every predetermined time or according to an operator's instruction input. A reactor core properties prediction calculation unit generates the reactor core properties prediction data whenever the reactor core properties performance data is calculated and stored. That is, in the related-art reactor core monitoring device, the reactor core properties performance data and the reactor core properties prediction data are generated at every predetermined time (or according to an operator's instruction input). In this case, when the state of the nuclear reactor (reactor core) has changed greatly in a short time, high-precision reactor core properties prediction data cannot be generated, and a monitoring system of the nuclear reactor becomes insufficient. As a result, emergency response may be delayed.

The invention solves the above-described problems, and an object thereof is to provide a nuclear reactor monitoring device, a nuclear reactor control device, and a nuclear power generation plant that makes it possible to immediately acquire prediction data of a reactor core state to ensure a high level of safety of operation monitoring even if the state of a reactor core has changed in a short time.

### Solution to Problem

A nuclear reactor monitoring device of the invention for achieving the above object is defined in claim 1. Such a device includes a reactor core state quantity detecting unit that detects the state quantity of a reactor core in a nuclear reactor; a reactor core performance data generating unit that generates reactor core performance data on the basis of the state quantity of the reactor core detected by the reactor core state quantity detecting unit; a reactor core prediction data generating unit that predicts and calculates a change with the passage of time of the reactor core on the basis of a current reactor core operation condition and the reactor core performance data, to generate reactor core prediction data; and a reactor core prediction data generation timing setting unit that performs the generation of the reactor core prediction data by the reactor core prediction data generating unit when the reactor core performance data exceeds a preset prescribed range.

Accordingly, the reactor core performance data generating unit is capable of generating the reactor core performance data on the basis of the state quantity of the reactor core, the reactor core prediction data generating unit is capable of predicting and calculating a change with the passage of time of the reactor core to generate the reactor core prediction data on the basis of the current reactor core operation condition and the reactor core performance data, and the reactor core prediction data generation timing setting unit performs the regeneration of the reactor core prediction data when the reactor core performance data exceeds the prescribed range. Therefore, the reactor core prediction data can always be optimized according to the current reactor core performance data, and even if the state of the nuclear reactor has changed in a short time, a high level of safety of the operation monitoring can be ensured by immediately acquiring the prediction data of the reactor core state.

In the nuclear reactor monitoring device of the invention, the reactor core prediction data generation timing setting unit performs the generation of the reactor core prediction data by the reactor core prediction data generating unit when a deviation between current reactor core performance data and previous reactor core performance data exceeds a preset prescribed value.

Accordingly, when the deviation between the current reactor core performance data and the previous reactor core performance data exceeds the prescribed value, the reactor core prediction data can always be optimized according to the current reactor core performance data by performing the regeneration of the reactor core prediction data.

In the nuclear reactor monitoring device, the reactor core prediction data generation timing setting unit performs the generation of the reactor core prediction data by the reactor core prediction data generating unit at every predetermined time.

Accordingly, the reactor core prediction data can always be optimized according to the current reactor core performance data by performing the regeneration of the reactor core prediction data at every predetermined time.

In the nuclear reactor monitoring device of the invention, a display unit is preferably provided so as to be capable of displaying the reactor core performance data and the reactor core prediction data on the same screen.

Accordingly, since the reactor core performance data and the reactor core prediction data can be displayed on the same screen in the display unit, it is possible for the operator to easily grasp the reactor core prediction data with respect to the reactor core performance data, the suitable operation of the nuclear reactor according to the reactor core prediction data becomes possible, and operability and safety can be improved.

In the nuclear reactor monitoring device of the invention, the display unit is preferably capable of continuously displaying the reactor core performance data and the reactor core prediction data in the direction of a time axis.

Accordingly, since the reactor core performance data and the reactor core prediction data are capable of being displayed in the display unit with the passage of time, a change in the reactor core data can be easily grasped.

In the nuclear reactor monitoring device of the invention, a central control room is preferably provided with an operation control console panel and a first operation monitoring monitor of the nuclear reactor and is provided with an operation monitoring console panel and a second operation monitoring monitor, the current reactor core operation condition is capable of being input by the operation control console panel or the operation monitoring console panel of the nuclear reactor, and the reactor core performance data and the reactor core prediction data are capable of being displayed on the first operation monitoring monitor or the second operation monitoring monitor.

Accordingly, since the reactor core operation condition can be input from the plurality of console panel, and the reactor core performance data and the reactor core prediction data can be displayed on the plurality of operation monitoring monitors, operation or display by a plurality of operators becomes possible, and operability can be improved.

Additionally, a nuclear reactor control device is defined in claim 6. It includes a reactor core state quantity detecting unit that detects the state quantity of a reactor core in a nuclear reactor; a reactor core performance data generating unit that generates reactor core performance data on the basis of the state quantity of the reactor core detected by the reactor core state quantity detecting unit; a reactor core prediction data generating unit that predicts and calculates a change with the passage of time of the reactor core on the basis of a current reactor core operation condition and the reactor core performance data, to generate reactor core prediction data; a reactor core prediction data generation timing setting unit that performs the generation of the reactor core prediction data by the reactor core prediction data generating unit when the reactor core performance data exceeds a preset prescribed range; an operation control console panel that performs the operation of the nuclear reactor; and an operation monitoring monitor capable of switching display contents with the operation control console panel and capable of displaying the reactor core performance data and the reactor core prediction data.

Accordingly, when the reactor core performance data exceeds the prescribed range, the reactor core prediction data generation timing setting unit performs the regeneration of the reactor core prediction data, and the reactor core performance data and the reactor core prediction data are displayed on the operation monitoring monitor. Therefore, the reactor core prediction data can always be optimized according to the current reactor core performance data, and this reactor core prediction data can be displayed on the operation monitoring monitor at any time by the operation control console panel. Even if the state of the nuclear reactor has changed in a short time, a high level of safety of the operation monitoring can be ensured by immediately acquiring the prediction data of the reactor core state.

Additionally, a nuclear power generation plant includes the above nuclear reactor monitoring device.

Accordingly, in the nuclear power generation plant, even if the state of the nuclear reactor has changed in a short time, a high level of safety of the operation monitoring can be ensured by immediately acquiring the prediction data of the reactor core state.

### Advantageous Effects of Invention

According to the nuclear reactor monitoring device, the nuclear reactor control device, and the nuclear power generation plant, when the reactor core performance data exceeds the preset prescribed range, the generation of the reactor core prediction data by the reactor core prediction data generating unit is performed. Thus, even if the state of the nuclear reactor has changed in a short time, a high level of safety of the operation monitoring can be ensured by immediately acquiring the prediction data of the reactor core state.

### Brief Description of Drawings

Fig. 1 is a schematic configuration diagram in a nuclear reactor monitoring device related to one example of the invention.
Fig. 2 is a schematic view illustrating an input screen of a reactor core operation condition in an operation monitoring monitor connected to an operation control console panel.
Fig. 3 is a schematic view illustrating a display screen of reactor core performance data and reactor core prediction data in the operation monitoring monitor connected to the operation control console panel.
Fig. 4 is a schematic view illustrating a display screen of the reactor core performance data and the reactor core prediction data in the operation monitoring monitor connected to the operation control console panel.
Fig. 5 is a schematic view illustrating a display screen of the reactor core performance data and the reactor core prediction data in the operation monitoring monitor connected to the operation control console panel.
Fig. 6 is a flowchart illustrating a method for updating the reactor core prediction data in the nuclear reactor monitoring device of the present example.
Fig. 7 is a schematic configuration diagram illustrating a nuclear power generation plant.
Fig. 8 is a schematic view of the nuclear reactor monitoring device of the present example with respect to a nuclear reactor.

### Description of Embodiments

Hereinafter, a preferable example of a nuclear reactor monitoring device, a nuclear reactor control device, and a nuclear power generation plant related to the invention will be described in detail with reference to the accompanying drawings. In addition, the invention is not limited by this example.

### Example

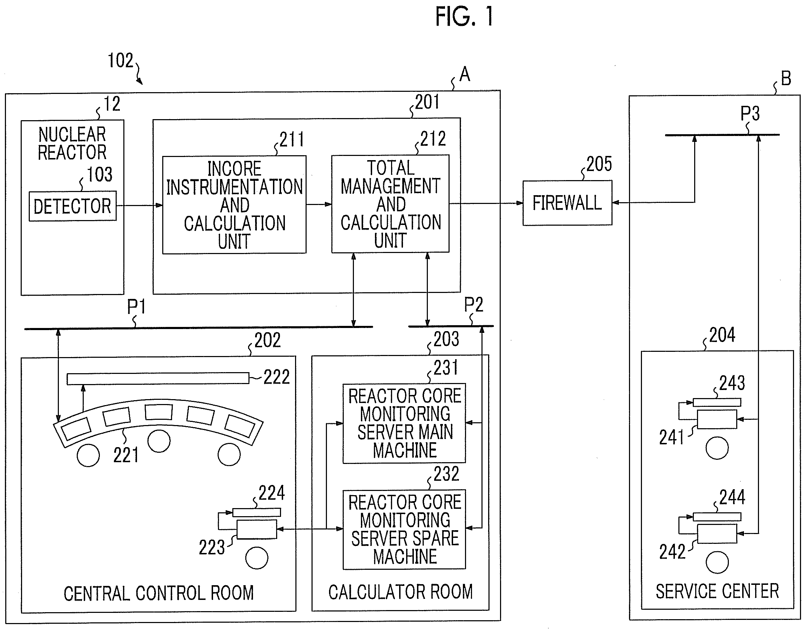

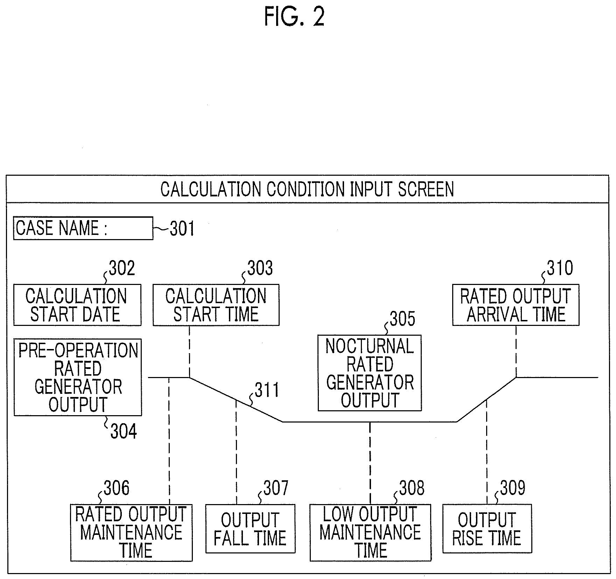

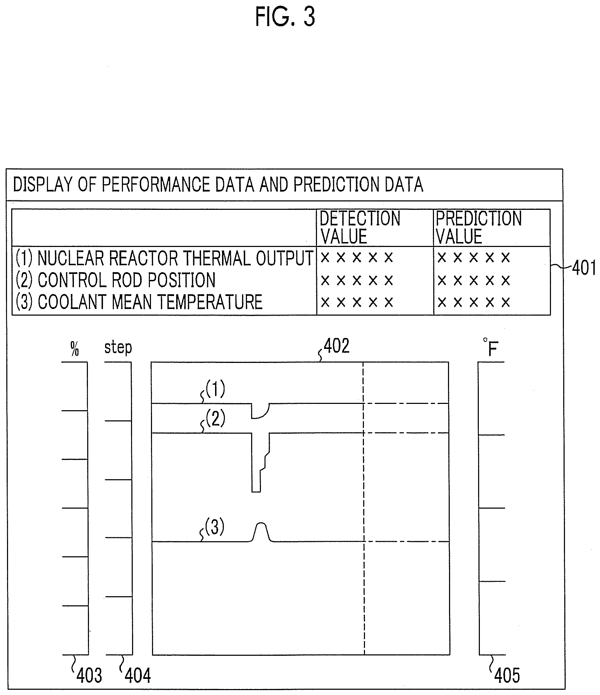

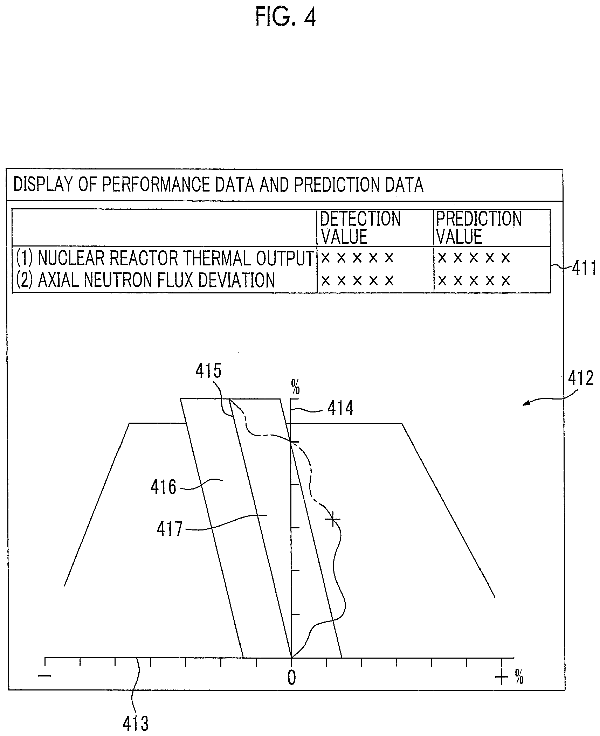

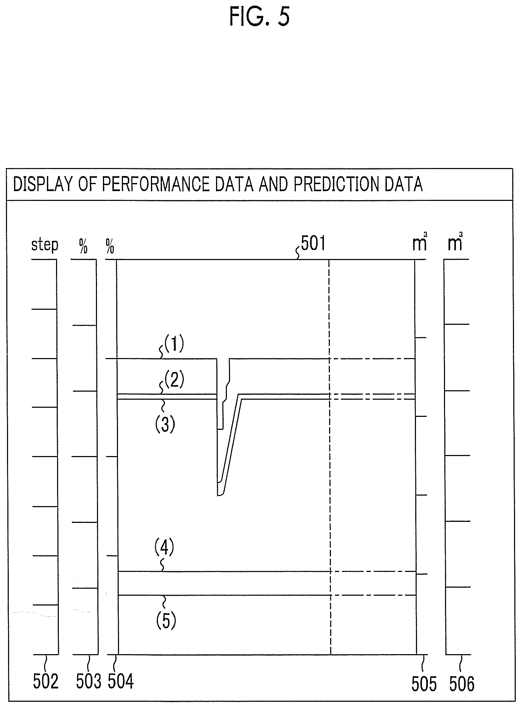

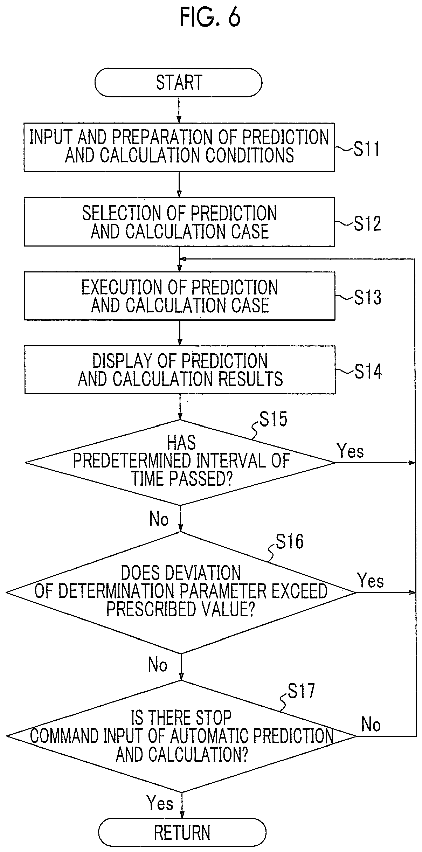

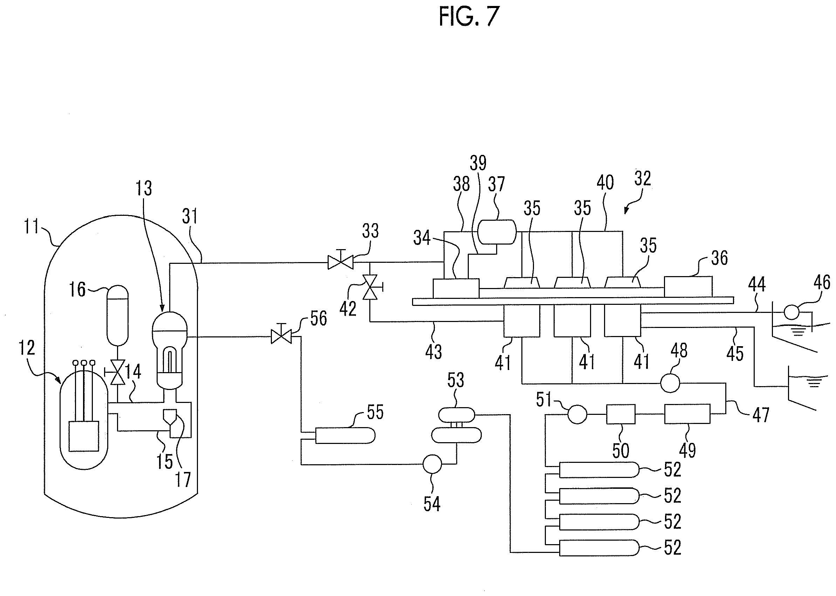

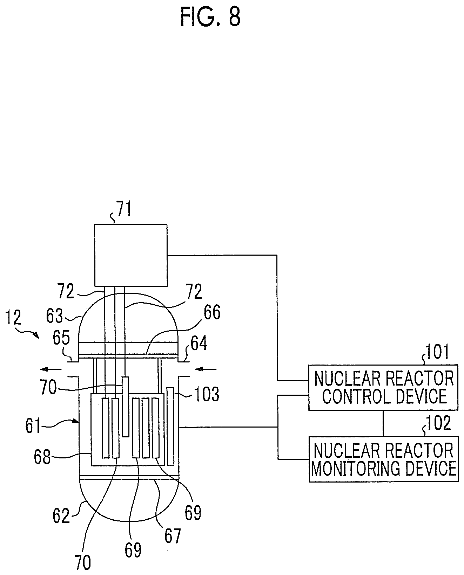

Fig. 1 is a schematic configuration diagram in the nuclear reactor monitoring device related to one example of the invention, Fig. 2 is a schematic view illustrating an input screen of reactor core operation conditions in an operation monitoring monitor connected to an operation control console panel, Figs. 3 and 4 are schematic views illustrating a display screen of reactor core performance data and reactor core prediction data in the operation monitoring monitor connected to the operation control console panel, Fig. 5 is a schematic view illustrating a display screen of the reactor core performance data and the reactor core prediction data in the operation monitoring monitor connected to the operation control console panel, Fig. 6 is a flowchart illustrating a method for updating the reactor core prediction data in the nuclear reactor monitoring device of the present example, Fig. 7 is a schematic configuration diagram illustrating a nuclear power generation plant, and Fig. 8 is a schematic view of the nuclear reactor monitoring device of the present example with respect to a nuclear reactor.

The nuclear reactor of the present example is a pressurized water reactor (PWR) that uses light water as a nuclear reactor coolant and a neutron moderator, generates high-temperature high-pressure water that is not boiled over an overall reactor core, sends the high-temperature high-pressure water to a steam generator to generate steam through heat exchange, and sends this steam to a turbo generator to generate power.

In the nuclear power generation plant having the pressurized water reactor of the present example, as illustrated in Fig. 7, the reactor container 11 has a pressurized water reactor 12 and a steam generator 13 stored therein, the pressurized water reactor 12 and the steam generator 13 are coupled together via a high-temperature-side supply line 14 and a low-temperature-side supply line 15, the high-temperature-side supply line 14 is provided with a pressurizer 16, and the low-temperature-side supply line 15 is provided with a primary cooling water pump 17. In this case, in order to use light water as the moderator and primary cooling water (coolant) and suppress boiling of the primary cooling water in a reactor core portion, a primary cooling system is controlled to maintain a high-pressure state of about 150 to 160 atmosphere with the pressurizer 16.

Accordingly, in the pressurized water reactor 12, the light water is heated as the primary cooling water by low-enriched uranium or MOX as fuel (nuclear fuel), and high-temperature primary cooling water is sent to the steam generator 13 through the high-temperature-side supply line 14 in a state where the primary cooling water is maintained at a predetermined high pressure by the pressurizer 16. In the steam generator 13, heat exchange is performed between the high-temperature high-pressure primary cooling water and high-temperature high-pressure secondary cooling water, and the cooled primary cooling water is returned to the pressurized water reactor 12 through the low-temperature-side supply line 15.

The steam generator 13 is coupled to a steam turbine 32 via a line 31 that supplies the heated secondary cooling water, that is, steam, and the line 31 is provided with a main steam isolation valve 33. The steam turbine 32 has a high-pressure turbine 34 and a low-pressure turbine 35, and has a generator (power generation device) 36 connected thereto. Additionally, a moisture separation heater 37 is provided between the high-pressure turbine 34 and the low-pressure turbine 35, a cooling water branch line 38 branched from the line 31 is coupled to the moisture separation heater 37, the high-pressure turbine 34 and the moisture separation heater 37 are coupled together by a low-temperature reheat pipe 39, and the moisture separation heater 37 and the low-pressure turbine 35 are coupled together by a high-temperature reheat pipe 40.

Moreover, the low-pressure turbine 35 of the steam turbine 32 has a condenser 41, and the condenser 41 has a turbine bypass line 43 having a bypass valve 42 connected thereto from the line 31, and has an intake pipe 44 and a drain pipe 45 that supplies and discharges cooling water (for example, sea water) coupled thereto. The intake pipe 44 has a circulating water pump 46, and has the other end portion arranged in the sea together with a drain pipe 45.

The condenser 41 has a line 47 connected thereto, and has a condensate pump 48, a ground capacitor 49, the condensate demineralizer 50, a condensate booster pump 51, and a low-pressure feed water heater 52 connected thereto. Additionally, the line 47 has a deaerator 53 coupled thereto, and has a main feed water pump 54, a high-pressure feed water heater 55, and a main feed water control valve 56 provided thereat.

Accordingly, the steam generated by performing heat exchange with high-temperature high-pressure primary cooling water in the steam generator 13 is sent to the steam turbine 32 (from the high-pressure turbine 34 to the low-pressure turbine 35) through line 31, and the steam turbine 32 is driven with this steam to generate power with the generator 36. In this case, the steam from the steam generator 13 drives the low-pressure turbine 35 after the moisture included in the steam is removed and heated in the moisture separation heater 37, after driving the high-pressure turbine 34. Then, the steam that has driven the steam turbine 32 is cooled into condensate using sea water in the condenser 41, and is returned to the steam generator 13 through the ground capacitor 49, the condensate demineralizer 50, the low-pressure feed water heater 52, the deaerator 53, the high-pressure feed water heater 55, or the like.

In the pressurized water reactor 12 applied to such a nuclear power generation plant, as illustrated in Fig. 8, a nuclear reactor vessel 61 is constituted of a nuclear reactor vessel body 62 and a nuclear reactor vessel lid 63. The nuclear reactor vessel 61 assumes a closed cylindrical shape that assumes spherical surface shapes at upper and lower portions, and an upper portion thereof is formed with an inlet nozzle (inlet nozzle stub) 64 that supplies the light water (coolant) as the primary cooling water and an outlet nozzle (outlet nozzle stub) 65 that discharges the light water.

The nuclear reactor vessel 61 has an upper reactor core support plate 66 and a lower reactor core support plate 67 fixed therein, and a reactor core (reactor core barrel) 68 is arranged between the upper and lower reactor core support plates and is hung from and supported by the upper reactor core support plate 66. The reactor core 68 has a number of fuel assemblies 69 arranged therein, and the fuel assemblies 69 are configured such that a number of fuel rods are bundled in the shape of a grid with a support grid, though not illustrated. Additionally, the reactor core 68 has a number of control rods arranged therein, and upper end portions of the control rods are brought together into a control rod cluster 70, and are able to be inserted into the fuel assemblies 69.

The nuclear reactor vessel lid 63 has a control rod drive 71 provided at the upper portion thereof, and a control rod cluster drive shaft 72 that extends downward and extends to the reactor core 68 through a control rod cluster guide tube so as to be capable of gripping the control rod cluster 70. The control rod drive 71 controls nuclear reactor output by inserting the control rod cluster 70 into the fuel assemblies 69 of the reactor core 68.

Accordingly, the control rod drive 71 adjusts an up-down position of the control rod cluster (control rods) 70 with respect to the fuel assemblies 69, thereby controlling nuclear fission within the reactor core 68. That is, as the nuclear fuel that constitutes the fuel assemblies 69 performs nuclear fission, neutrons are emitted, and the light water as the moderator and the primary cooling water lowers the kinetic energy of the emitted fast neutrons to bring the fast neutrons into thermal neutrons, makes new nuclear fission easy, and takes the generated heat to perform cooling. Then, if the control rod cluster (control rods) 70 is inserted into the fuel assemblies 69, the number of neutrons generated within the reactor core 68 can be adjusted, and a nuclear reactor can be stopped.

Then, this pressurized water reactor (hereinafter referred to as a nuclear reactor) 12 is capable of being controlled by a nuclear reactor control device 101, and is capable of being monitored by a nuclear reactor monitoring device 102. That is, the nuclear reactor 12 has provided therein a detector (for example, a neutron flux detector that detects the level and distribution of a neutron flux) 103 as a reactor core state quantity detecting unit that detects the state quantities of the reactor core 68. The nuclear reactor control device 101 controls the driving of the control rod drive 71 on the basis of the state quantities of the reactor core 68 detected by a detector 103. Additionally, the nuclear reactor monitoring device 102 generates reactor core performance data and reactor core prediction data on the basis of the state quantities of the reactor core 68, and compares the reactor core performance data with the reactor core prediction data, thereby monitoring the reactor core 68.

In the nuclear reactor monitoring device 102 in the present example, as illustrated in Fig. 1, the nuclear reactor 12, a controller room 201, a central control room 202, and a calculator room 203 are provided within a region A of a facility of the nuclear power generation plant.

The controller room 201 is constituted of an incore instrumentation and calculation unit 211 and a total management and calculation device 212. The incore instrumentation and calculation unit 211 is connected to the detector 103 that is provided at the nuclear reactor 12 to detect the state quantities of the reactor core 68. Therefore, the incore instrumentation and calculation unit 211 functions as a reactor core performance data generating unit that generates various kinds of reactor core performance data on the basis of the state quantities of the reactor core 68 detected by the detector 103. The total management and calculation device 212 has the various kinds of reactor core performance data generated by the incore instrumentation and calculation unit 211 input thereto, and performs management or various calculation of the various kinds of reactor core performance data.

The central control room 202 is a room that is substantially sealed, and has an operation control console panel 221 that operates the nuclear reactor 12, and an operation monitoring monitor (first operation monitoring monitor) 222 serving as a display unit capable of displaying various kinds of data. The operation control console panel 221 is equipped with a functional integrated VDU (functional integrated operating device) or a safety system VDU (safety system operating device). In addition, the VDU is a Visual Display Unit. The operation control console panel 221 is operated by an operator, has a plurality of displays, and is able to perform the monitoring or operating by an operator's touch operation. The operation monitoring monitor 222 displays the various kinds of data according to the operation of the operation control console panel 221 by the operator.

The total management and calculation device 212 and the operation control console panel 221 are connected via a screen bus P1. That is, the total management and calculation device 212 and the operation control console panel 221 can mutually transmit and receive various kinds of data with the screen bus P1.

Additionally, the central control room 202 has an operation monitoring console panel 223 that monitors the operation of the nuclear reactor 12, and an operation monitoring monitor (second operation monitoring monitor) 224 serving as a display unit capable of displaying various kinds of data.

The calculator room 203 has a reactor core monitoring server main machine 231, and a reactor core monitoring server spare machine 232. The reactor core monitoring server main machine 231 and the reactor core monitoring server spare machine 232 have substantially the same functions, and the reactor core monitoring server main machine 231 mainly functions normally, and the reactor core monitoring server spare machine 232 functions when a problem occurs in the reactor core monitoring server main machine 231.

The total management and calculation device 212, and the reactor core monitoring server main machine 231 and the reactor core monitoring server spare machine 232 are connected together via a reactor core monitoring bus P2. That is, the total management and calculation device 212, and the reactor core monitoring server main machine 231 and the reactor core monitoring server spare machine 232 can mutually transmit and receive various kinds of data with the reactor core monitoring bus P2. Additionally, the operation monitoring console panel 223, and the reactor core monitoring server main machine 231 and the reactor core monitoring server spare machine 232 are also connected together, and can mutually transmit and receive various kinds of data.

The reactor core monitoring server main machine 231 and the reactor core monitoring server spare machine 232 function as a reactor core prediction data generating unit that predicts and calculates a change with the passage of time of the reactor core 68 on the basis of the current reactor core operation conditions (reactor core operation plan) and the reactor core performance data, and generates reactor core prediction data. That is, the operator can input the reactor core operation conditions with the operation monitoring console panel 223, and the input data is sent to the reactor core monitoring server main machine 231 and the reactor core monitoring server spare machine 232. Meanwhile, the total management and calculation device 212 sends the various kinds of reactor core performance data generated by the incore instrumentation and calculation unit 211 to the reactor core monitoring server main machine 231 and the reactor core monitoring server spare machine 232. Then, the reactor core monitoring server main machine 231 and the reactor core monitoring server spare machine 232 can generate the reactor core prediction data on the basis of the reactor core operation conditions and the reactor core performance data.

In this case, as a technique in which the incore instrumentation and calculation unit 211 generates the various kinds of reactor core performance data on the basis of the state quantities of the reactor core 68, and a technique in which the reactor core monitoring server main machine 231 (the reactor core monitoring server spare machine 232) generates the reactor core prediction data on the basis of the reactor core operation conditions and the reactor core performance data, techniques that have been used in the past may be used. For example, techniques described in JP-A-2010-190853, JP-A-2010-190854, Japanese Patent No. 4919791, and the like may be used, and the invention is not limited to these techniques.

Thereafter, the reactor core monitoring server main machine 231 and the reactor core monitoring server spare machine 232 send the reactor core performance data and the reactor core prediction data to the operation monitoring console panel 223, and send the reactor core prediction data to the total management and calculation device 212. Accordingly, the operator can display the reactor core performance data and the reactor core prediction data on the operation monitoring monitor 224 with the operation monitoring console panel 223. Additionally, since the total management and calculation device 212 transmits and receives various kinds of data with the operation control console panel 221 via the screen bus P1, the operator can display the reactor core performance data and the reactor core prediction data on the operation monitoring monitor 222 with the operation control console panel 221.

In addition, a service center 204 is provided within the facility of the nuclear power generation plant or a region B of a separate distant other facility. The service center 204 is provided with two sets of operation monitoring console panels 241 and 242 and operation monitoring monitors 243 and 244 as the same facilities as the operation monitoring console panel 223 and the operation monitoring monitor 224 that are provided at the central control room 202. The respective operation monitoring console panels 241 and 242 are connected to the total management and calculation device 212 via a station bus P3 and a firewall 205. Accordingly, the operator can input the reactor core operation conditions with the respective operation monitoring console panels 241 and 242, and the input data is sent to the reactor core monitoring server main machine 231 and the reactor core monitoring server spare machine 232 via the station bus P3, the firewall 205, and the reactor core monitoring bus P2. Then, the reactor core monitoring server main machine 231 and the reactor core monitoring server spare machine 232 can generate the reactor core prediction data on the basis of the reactor core operation conditions and the reactor core performance data.

Thereafter, since the reactor core monitoring server main machine 231 and the reactor core monitoring server spare machine 232 send the reactor core prediction data to the total management and calculation device 212, the operator can obtain access to the total management and calculation device 212 from the operation monitoring console panels 241 and 242, thereby displaying the reactor core performance data and the reactor core prediction data on the operation monitoring monitors 243 and 244.

Here, a method for inputting the reactor core operation conditions of the nuclear reactor 12 by the operation control console panel 221 and a method of display by the operation monitoring monitor 222 will be described. In addition, this is also the same in the operation monitoring console panel 223 and the operation monitoring monitor 224, the operation monitoring console panels 241 and 242, and the operation monitoring monitors 243 and 244.

In the operation monitoring monitor 222 connected to the operation control console panel 221, as illustrated in Fig. 2, a calculation condition input screen is provided with a case name input unit 301 of an operation plan, a plan start date input unit 302, a calculation start time input unit 303, a pre-operation rated generator output input unit 304, a nocturnal rated generator output input unit 305, a rated output maintenance time input unit 306, an output fall time input unit 307, a low output maintenance time input unit 308, an output rise time input unit 309, and a rated output arrival time input unit 310. The operator inputs data to the respective input units 301 to 310 of the operation monitoring monitor 222, using the operation control console panel 221, thereby generating a graph 311 of a daily (24 hours) operation plan in the nuclear reactor 12. The nuclear reactor monitoring device 102 (refer to Fig. 8) carries out prediction and calculation on the basis of the graph 311 of the operation plan.

A display method of the reactor core performance data and the reactor core prediction data in the operation monitoring monitor 222 connected to the operation control console panel 221 will be described.

In the operation monitoring monitor 222 connected to the operation control console panel 221, as illustrated in Fig. 3, an upper portion of a display screen of the performance data and the prediction data are provided with a first display unit 401 that displays detection values and prediction values of various kinds of data, and a second display unit 402 that displays changes in the performance data and the prediction data. In this case, prediction values after 15 minutes, for example, are displayed on the first display unit 401. On the same screen, (1) Nuclear reactor thermal output (%), (2) Control rod position (step), and (3) Coolant mean temperature (°F) are able to be displayed as various kinds of data, and level meters 403, 404, and 405 are provided on the left and the right of the second display unit 402.

The operation monitoring monitor 222 is able to display the performance data and the prediction data of the reactor core 68 on the same screen in the second display unit 402, and is able to continuously display the performance data and the prediction data of the reactor core 68 in the direction of a time axis. That is, the second display unit 402 displays the performance data of (1) Nuclear reactor thermal output, (2) Control rod position, and (3) Coolant mean temperature with solid lines, and displays the prediction data of (1) Nuclear reactor thermal output, (2) Control rod position, and (3) Coolant mean temperature with one-dot chain lines. Here, as for the various kinds of data displayed on the second display unit 402, a horizontal axis is time, a vertical axis is quantity, and a position indicated by a dotted line is a current performance datum.

Additionally, in the operation monitoring monitor 222 connected to the operation control console panel 221, if display is switched, as illustrated in Fig. 4, an upper portion of a display screen is provided with a first display unit 411 that displays the detection values and prediction values of the various kinds of data and a second display unit 412 that displays the changes in the performance data and the prediction data. On the same screen, the relationship between (1) Nuclear reactor thermal output (%) and (2) Axial neutron flux deviation (%) is able to be displayed as the various kinds of data, and level meters 413 and 414 of the second display unit 412 are provided.

The operation monitoring monitor 222 is able to display the performance data and the prediction data of the reactor core 68 on the same screen in the second display unit 412, and is able to continuously display the performance data and the prediction data of the reactor core 68 in the direction of the time axis. That is, the second display unit 412 displays the performance data of the relationship between (1) Nuclear reactor thermal output and (2) Axial neutron flux deviation with solid lines, and displays the prediction data of the relationship between (1) Nuclear reactor thermal output and (2) Axial neutron flux deviation with one-dot chain lines. Here, as for various kinds of data, a horizontal axis is (1) Nuclear reactor thermal output, a vertical axis is (2) Axial neutron flux deviation, a time axis is set along the graph, and a position indicated by mark x is current performance data. An optimum value 415 of related values between the nuclear reactor thermal output and the axial neutron flux deviation is set, and proper regions 416 and 417 are set at both of the sides.

Subsequently, a method for displaying the reactor core performance data and the reactor core prediction data in the operation monitoring monitor 224 connected to the operation monitoring console panel 223 will be described. In addition, this is also the same as in the display methods of the operation monitoring monitors 243 and 244 connected to the operation monitoring console panels 241 and 242.

In the operation monitoring monitor 224 connected to the operation monitoring console panel 223, as illustrated in Fig. 5, a display screen of the performance data and the prediction data is provided with a display unit 501 that displays changes in the performance data and the prediction data, and the display unit 501 is the same as the second display units 302 and 402 in the operation monitoring monitor 223. On the same screen, (1) Control rod position (step), (2) Nuclear reactor thermal output (%), (3) Generator output (%), (4) Diluted quantity (m³), and (5) Concentrated quantity (m³) are able to be displayed as the various kinds of data, and level meters 502, 503, 504, 505, and 506 are provided on the left and the right of the display unit 501.

The operation monitoring monitor 224 is able to display the performance data and the prediction data of the reactor core 68 on the same screen in the display unit 501, and is able to continuously display the performance data and the prediction data of the reactor core 68 in the direction of the time axis. That is, the display unit 501 displays the performance data of (1) Control rod position, (2) Nuclear reactor thermal output, (3) Generator output, Diluted quantity, and Concentrated quantity with solid lines, and displays the prediction data of (1) Control rod position, (2) Nuclear reactor thermal output, (3) Generator output, (4) Diluted quantity, and (5) Concentrated quantity with one-dot chain lines. Here, as for the various kinds of data displayed on the display unit 501, a horizontal axis is time, a vertical axis is quantity, and a position indicated by a dotted line is a current performance datum.

In addition, the respective operation monitoring monitors 222, 224, 243, and 244 are able to display the nuclear reactor thermal output, the control rod position, the coolant mean temperature, the generator output, xenon (Xe) reactivity, the diluted quantity, the concentrated quantity, critical boron concentration, maximum linear power density, a nuclear enthalpy rise hot channel factor, a critical heat flux ratio, the axial neutron flux deviation, an axial neutron flux deviation upper limit, an axial neutron flux deviation lower limit, or the like in predetermined combinations, and are able to display switching with a predetermined switch.

In the nuclear reactor monitoring device 102 in the present example, as illustrated in Fig. 1, the reactor core monitoring server main machine 231 (the reactor core monitoring server spare machine 232) functions as a reactor core prediction data generation timing setting unit that generates prediction data when predetermined performance data exceeds a preset prescribed range. In this case, the reactor core monitoring server main machine 231 (the reactor core monitoring server spare machine 232) performs regeneration of the prediction data when the deviation between the current performance data and the previous performance data exceeds a preset prescribed value. Additionally, the reactor core monitoring server main machine 231 (reactor core monitoring server spare machine 232) performs the regeneration of the reactor core prediction data at every predetermined time.

Here, a method for updating the prediction data in the nuclear reactor monitoring device 102 will be described on the basis of the flowchart of Fig. 6.

In the method for updating the prediction data in the nuclear reactor monitoring device 102, as illustrated in Fig. 6, the operator inputs and prepares prediction and calculation conditions using, for example, the operation control console panel 221 in Step S11, the operator selects a prediction and calculation case to be executed this time from a plurality of prediction and calculation cases in Step S12, and executes the selected prediction and calculation case in Step S13. Then, the reactor core monitoring server main machine 231 and the reactor core monitoring server spare machine 232 execute prediction and calculation, and display prediction and calculation results on the operation monitoring monitor 222 in Step S14. That is, as illustrated in Figs. 4 and 5, the performance data and the prediction data of the reactor core 68 are continuously displayed on the operation monitoring monitor 222.

In Step S15, it is determined whether or not a predetermined interval of time has passed after the reactor core monitoring server main machine 231 and the reactor core monitoring server spare machine 232 execute the prediction and the calculation. Here, if it is determined that a predetermined interval of time has passed after the reactor core monitoring server main machine 231 and the reactor core monitoring server spare machine 232 execute the prediction and the calculation (Yes), the processing returns to Step S13 where the reactor core monitoring server main machine 231 and the reactor core monitoring server spare machine 232 execute the prediction and the calculation and update the performance data and the prediction data of the reactor core 68.

On the other hand, in Step S15, if it is determined that a predetermined interval of time has not passed after the reactor core monitoring server main machine 231 and the reactor core monitoring server spare machine 232 execute the prediction and the calculation (No), the processing proceeds to Step S16. In this Step S16, it is determined whether the deviation of a determination parameter, that is, the deviation between the current performance data and the previous performance data, exceeds the preset prescribed value. Here, if it is determined that the deviation of the determination parameter exceeds the prescribed value (Yes), the processing returns to Step S13 where the reactor core monitoring server main machine 231 and the reactor core monitoring server spare machine 232 execute the prediction and the calculation, and updates the performance data and the prediction data of the reactor core 68. On the other hand, if it is determined that the deviation of the determination parameter is equal to or lower than the prescribed value (No), it is determined in Step S17 whether or not a stop command for automatic prediction and calculation has been input. If it is determined that the stop command for automatic prediction and calculation is not input (No), the processing returns to Step S13, and if it is determined that the stop command for automatic prediction and calculation has been input (Yes), the processing ends here.

In addition, the determination parameter used in Step S16, that is, the performance data is, for example, the control rod position, the nuclear reactor thermal output, a coolant flow rate, the axial neutron flux deviation, the critical boron concentration, coolant inlet temperature, or the like. In the performance data, if the deviation between a current value and a value when being previously calculated exceeds the prescribed value, the performance data and the prediction data of the reactor core 68 is updated.

In this way, in the nuclear reactor monitoring device of the present example, the detector 103 that detects the state quantities of the reactor core 68 in the nuclear reactor 12, the incore instrumentation and calculation unit 211 that generates the reactor core performance data on the basis of the state quantities of the reactor core 68 detected by the detector 103, and the reactor core monitoring server main machine 231 that predicts and calculates a change with the passage of time of the reactor core 68 on the basis of the current reactor core operation conditions and the reactor core performance data to generate the reactor core prediction data are provided, and the reactor core monitoring server main machine 231 is adapted to generate the reactor core prediction data when the reactor core performance data exceeds the preset prescribed range.

Accordingly, when the reactor core performance data exceeds the prescribed range, the regeneration of the reactor core prediction data is performed. Therefore, the reactor core prediction data can always be optimized according to current reactor core performance data. Even if the state of the nuclear reactor 12 has changed in a short time, a high level of safety of the operation monitoring can be ensured by immediately acquiring the prediction data of the reactor core state.

In this case, when the deviation between the current reactor core performance data and the previous reactor core performance data exceeds the prescribed value, it is desirable to generate the reactor core prediction data, and the reactor core prediction data can always be optimized according to the current reactor core performance data.

Additionally, it is desirable to generate the reactor core prediction data at every predetermined time, and the reactor core prediction data can always be optimized according to the current reactor core performance data irrespective of a change in the current reactor core performance data.

In the nuclear reactor monitoring device of the present example, the operation monitoring monitors 222 and 224 capable of displaying the reactor core performance data and the reactor core prediction data on the same screen are provided. Accordingly, since the reactor core performance data and the reactor core prediction data can be displayed on the same screen in the operation monitoring monitors 222 and 224, it is possible for the operator to easily grasp the reactor core prediction data with respect to the reactor core performance data, the suitable operation of the nuclear reactor 12 according to the reactor core prediction data becomes possible, and operability and safety can be improved.

Additionally, in the nuclear reactor monitoring device of the present example, the operation monitoring monitors 222 and 224 are capable of continuously displaying the reactor core performance data and the reactor core prediction data in the direction of the time axis. Accordingly, since the reactor core performance data and the reactor core prediction data are capable of being displayed in the operation monitoring monitors 222 and 224 with the passage of time, a change in the reactor core data can be easily grasped.

Additionally, in the nuclear reactor monitoring device of the present example, the central control room 202 is provided with the operation control console panel 221 and the operation monitoring monitor 222 of the nuclear reactor 12 and is provided with the operation monitoring console panel 223 and the operation monitoring monitor 224, the current reactor core operation conditions are capable of being input by the operation control console panel 221 or the operation monitoring console panel 223, and the reactor core performance data and the reactor core prediction data are capable of being displayed on the respective operation monitoring monitors 222 and 224. Accordingly, since the reactor core operation conditions can be input from the plurality of console panels 221 and 223, and the reactor core performance data and the reactor core prediction data can be displayed on the plurality of operation monitoring monitors 222 and 224, operation or display by a plurality of operators becomes possible, and operability can be improved.

Additionally, in the nuclear reactor control device of the present example, when the reactor core performance data exceeds the prescribed range, regeneration of the reactor core prediction data is performed in the central control room 202, and the reactor core performance data and the reactor core prediction data are displayed on the operation monitoring monitors 222 and 224. Therefore, the reactor core prediction data can always be optimized according to the current reactor core performance data, and this reactor core prediction data can be displayed on the operation monitoring monitor 222 at any time by the operation control console panel 221. Even if the state of the nuclear reactor 12 has changed in a short time, a high level of safety of the operation monitoring can be ensured by immediately acquiring the prediction data of the reactor core state.

In addition, although the nuclear reactor monitoring device related to the invention is applied to the pressurized water reactor, the invention can also be applied to other nuclear reactors, such as a boiling type nuclear reactor.

### Reference Signs List

12: NUCLEAR REACTOR
61: NUCLEAR REACTOR VESSEL
68: REACTOR CORE
69: FUEL ASSEMBLY
70: CONTROL ROD CLUSTER
71: CONTROL ROD DRIVE
101: NUCLEAR REACTOR CONTROL DEVICE
102: NUCLEAR REACTOR MONITORING DEVICE
103: DETECTOR (REACTOR CORE STATE QUANTITY DETECTING UNIT)
201: CONTROLLER ROOM
202: CENTRAL CONTROL ROOM
203: CALCULATOR ROOM
211: INCORE INSTRUMENTATION AND CALCULATION UNIT (REACTOR CORE PERFORMANCE DATA GENERATING UNIT)
212: TOTAL MANAGEMENT AND CALCULATION DEVICE
221: OPERATION CONTROL CONSOLE PANEL
222: OPERATION MONITORING MONITOR (DISPLAY UNIT, FIRST OPERATION MONITORING MONITOR)
223: OPERATION MONITORING CONSOLE PANEL
224: OPERATION MONITORING MONITOR (DISPLAY UNIT, SECOND OPERATION MONITORING MONITOR)
231: REACTOR CORE MONITORING SERVER MAIN MACHINE (REACTOR CORE PREDICTION DATA GENERATING UNIT, REACTOR CORE PREDICTION DATA GENERATION TIMING SETTING UNIT)
232: REACTOR CORE MONITORING SERVER SPARE MACHINE (REACTOR CORE PREDICTION DATA GENERATING UNIT, REACTOR CORE PREDICTION DATA GENERATION TIMING SETTING UNIT)

## Claims

1. A nuclear reactor monitoring device (102) comprising:
a reactor core state quantity detecting unit (103) configured to detect the state quantity of a reactor core (68) in a nuclear reactor (12);
a reactor core performance data generating unit (211) configured to generate reactor core performance data on the basis of the state quantity of the reactor core detected by the reactor core state quantity detecting unit (103);
a reactor core prediction data generating unit (231, 232) configured to predict and calculate a change with the passage of time of the reactor core on the basis of a current reactor core operation condition and the reactor core performance data, to generate reactor core prediction data; and
a reactor core prediction data generation timing setting unit (231, 232) configured to perform the generation of the reactor core prediction data by the reactor core prediction data generating unit (231, 232) when the reactor core performance data exceeds a preset prescribed range,
**characterized in that** the reactor core prediction data generation timing setting unit (231, 232) is configured to perform the generation of the reactor core prediction data by the reactor core prediction data generating unit (231, 232) when a deviation between current reactor core performance data and a previous reactor core performance data exceeds a preset prescribed value.

2. The nuclear reactor monitoring device (102) according to Claim 1,
wherein the reactor core prediction data generation timing setting unit (231, 232) is configured to perform the generation of the reactor core prediction data by the reactor core prediction data generating unit (231, 232) at every predetermined time even when the reactor core performance data does not exceed the preset prescribed range.

3. The nuclear reactor monitoring device (102) according to Claim 1,
wherein a display unit is provided so as to be capable of displaying the reactor core performance data and the reactor core prediction data on the same screen.

4. The nuclear reactor monitoring device (102) according to Claim 3,
wherein the display unit is capable of continuously displaying the reactor core performance data and the reactor core prediction data in the direction of a time axis.

5. The nuclear reactor monitoring device (102) according to Claim 3 or 4,
wherein a central control room is provided with an operation control console panel and a first operation monitoring monitor of the nuclear reactor (12) and is provided with an operation monitoring console panel and a second operation monitoring monitor, the current reactor core operation condition is capable of being input by the operation control console panel or the operation monitoring console panel of the nuclear reactor (12), and the reactor core performance data and the reactor core prediction data are capable of being displayed on the first operation monitoring monitor or the second operation monitoring monitor.

6. A nuclear reactor control device (101) comprising:
the nuclear reactor monitoring device (102) according to any one of claims 1 to 5;
an operation control console panel configured to perform the operation of the nuclear reactor (12); and
an operation monitoring monitor capable of switching display contents with the operation control console panel and capable of displaying the reactor core performance data and the reactor core prediction data.

7. A nuclear power generation plant comprising:
the nuclear reactor monitoring device (102) according to any one of Claims 1 to 5.

## Patentansprüche

1. Kernreaktorüberwachungsvorrichtung (102), umfassend:
eine Reaktorkernzustandsquantitätsdetektionseinheit (103), die dafür konfiguriert ist, die Zustandsquantität eines Reaktorkerns (68) in einem Kernreaktor (12) zu detektieren,
eine Reaktorkernleistungsdatengenerierungseinheit (211), die dafür konfiguriert ist, anhand der durch die Reaktorkernzustandsquantitätsdetektionseinheit (103) detektierten Zustandsquantität des Reaktorkerns Reaktorkernleistungsdaten zu generieren,
eine Reaktorkernvorhersagedatengenerierungseinheit (231, 232), die dafür konfiguriert ist, eine im Lauf der Zeit stattfindende Veränderung des Reaktorkerns anhand einer momentanen Reaktorkernbetriebsbedingung und der Reaktorkernleistungsdaten vorherzusagen und zu berechnen, um Reaktorkernvorhersagedaten zu generieren, und
eine Reaktorkernvorhersagedatengenerierungs-Zeiteinstelleinheit (231, 232), die dafür konfiguriert ist, die Generierung der Reaktorkernvorhersagedaten durch die Reaktorkernvorhersagedatengenerierungseinheit (231, 232) auszuführen, wenn die Reaktorkernleistungsdaten einen voreingestellten vorgeschriebenen Bereich überschreiten,
**dadurch gekennzeichnet, dass** die Reaktorkernvorhersagedatengenerierungs-Zeiteinstelleinheit (231, 232) dafür konfiguriert ist, die Generierung der Reaktorkernvorhersagedaten durch die Reaktorkernvorhersagedatengenerierungseinheit (231, 232) auszuführen, wenn eine Abweichung zwischen momentanen Reaktorkernleistungsdaten und früheren Reaktorkernleistungsdaten einen voreingestellten vorgeschriebenen Wert überschreitet.

2. Kernreaktorüberwachungsvorrichtung (102) nach Anspruch 1,
wobei die Reaktorkernvorhersagedatengenerierungs-Zeiteinstelleinheit (231, 232) dafür konfiguriert ist, die Generierung der Reaktorkernvorhersagedaten durch die Reaktorkernvorhersagedatengenerierungseinheit (231, 232) zu jeder zuvor festgelegten Zeit auszuführen, selbst wenn die Reaktorkernleistungsdaten nicht den voreingestellten vorgeschriebenen Bereich überschreiten.

3. Kernreaktorüberwachungsvorrichtung (102) nach Anspruch 1,
wobei eine Anzeigeeinheit bereitgestellt ist, um die Reaktorkernleistungsdaten und die Reaktorkernvorhersagedaten auf demselben Bildschirm anzeigen zu können.

4. Kernreaktorüberwachungsvorrichtung (102) nach Anspruch 3,
wobei die Anzeigeeinheit in der Lage ist, die Reaktorkernleistungsdaten und die Reaktorkernvorhersagedaten kontinuierlich in der Richtung einer Zeitachse anzuzeigen.

5. Kernreaktorüberwachungsvorrichtung (102) nach Anspruch 3 oder 4,
wobei ein zentraler Kontrollraum mit einem Betriebssteuerungspult und einem ersten Betriebsüberwachungsmonitor des Kernreaktors (12) ausgestattet ist und mit einem Betriebsüberwachungspult und einem zweiten Betriebsüberwachungsmonitor ausgestattet ist, wobei die momentane Reaktorkernbetriebsbedingung durch das Betriebssteuerungspult oder das Betriebsüberwachungspult des Kernreaktors (12) eingegeben werden kann, und die Reaktorkernleistungsdaten und die Reaktorkernvorhersagedaten auf dem ersten Betriebsüberwachungsmonitor oder dem zweiten Betriebsüberwachungsmonitor angezeigt werden können.

6. Kernreaktorsteuerungsvorrichtung (101), umfassend:
die Kernreaktorüberwachungsvorrichtung (102) nach einem der Ansprüche 1 bis 5,
ein Betriebssteuerungspult, das dafür konfiguriert ist, den Betrieb des Kernreaktors (12) auszuführen, und
einen Betriebsüberwachungsmonitor, der in der Lage ist, Anzeigeinhalte mit dem Betriebssteuerungspult umzuschalten, und in der Lage ist, die Reaktorkernleistungsdaten und die Reaktorkernvorhersagedaten anzuzeigen.

7. Kernkraftwerk, das die Kernreaktorüberwachungsvorrichtung (102) nach einem der Ansprüche 1 bis 5 umfasst.

## Revendications

1. Dispositif de surveillance de réacteur nucléaire (102) comprenant :
une unité de détection de quantité d'état de coeur de réacteur (103) configurée pour détecter la quantité d'état d'un coeur de réacteur (68) dans un réacteur nucléaire (12) ;
une unité de génération de données de performance de coeur de réacteur (211) configurée pour générer des données de performance de coeur de réacteur sur la base de la quantité d'état du coeur de réacteur détectée par l'unité de détection de quantité d'état de coeur de réacteur (103) ;
une unité de génération de données de prédiction de coeur de réacteur (231, 232) configurée pour prédire et calculer un changement au cours du temps du coeur de réacteur sur la base d'une condition de fonctionnement de coeur de réacteur courante et des données de performance de coeur de réacteur, pour générer des données de prédiction de coeur de réacteur ; et
une unité d'établissement de temporisation de génération de données de prédiction de coeur de réacteur (231, 232) configurée pour réaliser la génération des données de prédiction de coeur de réacteur grâce à l'unité de génération de données de prédiction de coeur de réacteur (231, 232) quand les données de performance de coeur de réacteur dépassent une plage prescrite préétablie,
**caractérisé en ce que** l'unité d'établissement de temporisation de génération de données de prédiction de coeur de réacteur (231, 232) est configurée pour réaliser la génération des données de prédiction de coeur de réacteur grâce à l'unité de génération de données de prédiction de coeur de réacteur (231, 232) quand un écart entre des données de performance de coeur de réacteur courantes et des données de performance de coeur de réacteur précédentes dépasse une valeur prescrite préétablie.

2. Dispositif de surveillance de réacteur nucléaire (102) selon la revendication 1,
dans lequel l'unité d'établissement de temporisation de génération de données de prédiction de coeur de réacteur (231, 232) est configurée pour réaliser la génération des données de prédiction de coeur de réacteur grâce à l'unité de génération de données de prédiction de coeur de réacteur (231, 232) à chaque temps prédéterminé même lorsque les données de performance de coeur de réacteur ne dépassent pas la plage prescrite préétablie.

3. Dispositif de surveillance de réacteur nucléaire (102) selon la revendication 1,
dans lequel une unité d'affichage est prévue de façon à être capable d'afficher les données de performance de coeur de réacteur et les données de prédiction de coeur de réacteur sur le même écran.

4. Dispositif de surveillance de réacteur nucléaire (102) selon la revendication 3,
dans lequel l'unité d'affichage est capable d'afficher de manière continue les données de performance de coeur de réacteur et les données de prédiction de coeur de réacteur dans la direction d'un axe de temps.

5. Dispositif de surveillance de réacteur nucléaire (102) selon la revendication 3 ou 4,
dans lequel une salle de commande centrale est pourvue d'un panneau de console de commande de fonctionnement et d'un premier dispositif de surveillance de fonctionnement du réacteur nucléaire (12) et est pourvue d'un panneau de console de surveillance de fonctionnement et d'un deuxième dispositif de surveillance de fonctionnement, la condition de fonctionnement de coeur de réacteur courante peut être entrée par le panneau de console de commande de fonctionnement ou le panneau de console de surveillance de fonctionnement du réacteur nucléaire (12), et les données de performance de coeur de réacteur et les données de prédiction de coeur de réacteur peuvent être affichées sur le premier dispositif de surveillance de fonctionnement ou le deuxième dispositif de surveillance de fonctionnement.

6. Dispositif de commande de réacteur nucléaire (101) comprenant :
le dispositif de surveillance de réacteur nucléaire (102) selon l'une quelconque des revendications 1 à 5 ;
un panneau de console de commande de fonctionnement configuré pour exécuter le fonctionnement du réacteur nucléaire (12) ; et
un dispositif de surveillance de fonctionnement capable de commuter des contenus d'affichage avec le panneau de console de commande de fonctionnement et capable d'afficher les données de performance de coeur de réacteur et les données de prédiction de coeur de réacteur.

7. Centrale nucléaire comprenant :
le dispositif de surveillance de réacteur nucléaire (102) selon l'une quelconque des revendications 1 à 5.
